Europäisches Patentamt

(19) European Patent Office

Office européen des brevets

(11) Publication number: 0 118 400
A1

# (12) EUROPEAN PATENT APPLICATION

(21) Application number: 84830033.1

(22) Date of filing: 14.02.84

(51) Int. Cl.³: B 61 D 23/02
B 60 R 3/02

(30) Priority: 28.02.83 IT 5298283 U

(43) Date of publication of application:
12.09.84 Bulletin 84/37

(84) Designated Contracting States:
AT BE CH DE FR GB IT LI LU NL SE

(71) Applicant: FIAT FERROVIARIA SAVIGLIANO S.p.A.
Via Magenta 14
I-10128 Torino(IT)

(72) Inventor: Losa, Pierantonio
Via Puccini 48
I-10044 Pianezza (Torino)(IT)

(74) Representative: Buzzi, Franco et al,
c/o Jacobacci-Casetta & Perani S.p.A. Via Alfieri, 17
I-10121 Torino(IT)

(54) Steps with movable treads, particularly for railway and tramway vehicles.

(57) Steps with movable treads for railway and tramway vehicles comprising an upper tread (14) slidable parallel to and beneath the floor (10) of the vehicle between a withdrawn position and an extended position, and a lower tread (32) articulated to a support structure (22) rigid with the upper tread (14) and rotatable between a raised position and a lowered position. Drive means (28, 40) are provided for effecting the sliding of the upper tread (14) and the rotation of the lower tread (32) independently.

EP 0 118 400 A1

./...

FIG. 1

Steps with movable treads, particularly for railway and tramway vehicles

The present invention relates to steps with movable treads, particularly for railway and tramway vehicles and has the object of providing steps which are very convenient and versatile in use and, at the same time, have a simple and strong construction.

The steps according to the invention are characterised in that they comprise an upper tread slidable parallel to and beneath the floor of the vehicle between a withdrawn position and an extended position relative to the floor, and a lower tread articulated to a support structure rigid with the upper tread' and rotatable between a raised position in which it extends perpendicular to the upper tread and a lowered position in which it extends parallel to and projects further than the upper tread, drive means being provided for effecting the sliding of the upper tread and the rotation of the lower tread independently.

By virtue of this characteristic, it is made extremely convenient and easy for passengers to board and alight from a vehicle using the steps according to the invention, both when the difference in level between the fixed platform for boarding and alighting and the floor of the vehicle is considerable and when this difference in level is small. Indeed, in the first case both the upper tread and the lower tread will be operated and used, whereas in the second case it will suffice to use only the upper tread while the lower one may remain unused in its raised position.

- 2 -

The invention will now be described in detail with reference to the appended drawings, provided purely by way of non-limiting example, in which:

Figure 1 is a schematic view in partial cross-section of steps with movable treads according to the invention illustrated in an inoperative condition, and

Figure 2 is a view similar to Figure 1 illustrating the steps in the condition of use.

In the drawings, there is shown the floor 10 of a railway or tramway vehicle, beneath which is located a set of steps with two levels or movable treads 12 in correspondence with an access door of the vehicle, not illustrated.

The steps 12 include an upper tread 14 which is located parallel to and beneath the floor 10 at a distance usually of the order of 265 mm, and is fixed to a runner 16 slidably guided between four pairs of rotatable rollers (only four of which are illustrated at 18) carried by a fixed structure 20 located beneath the floor 10.

Beneath the front part of the slide 16 are fixed two side supports 22, only one of which is visible in the drawings, each carrying a respective attachment 24 for the shaft 26 of a pressurized -fluid jack 28 the cylinder of which is carried by the structure 20.

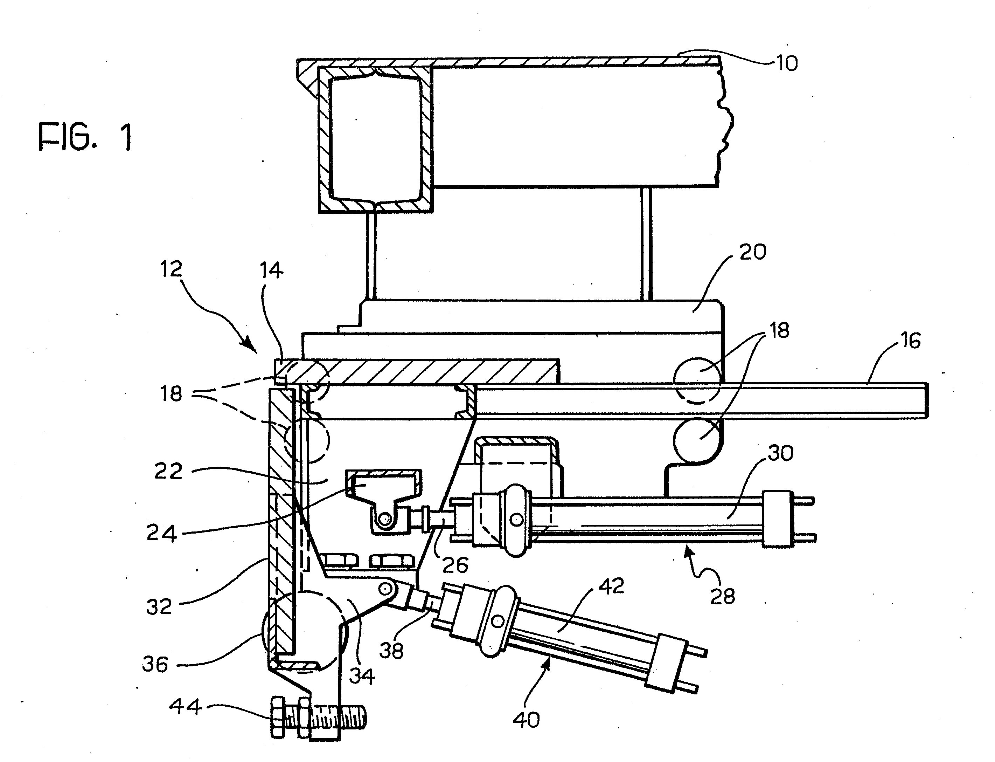

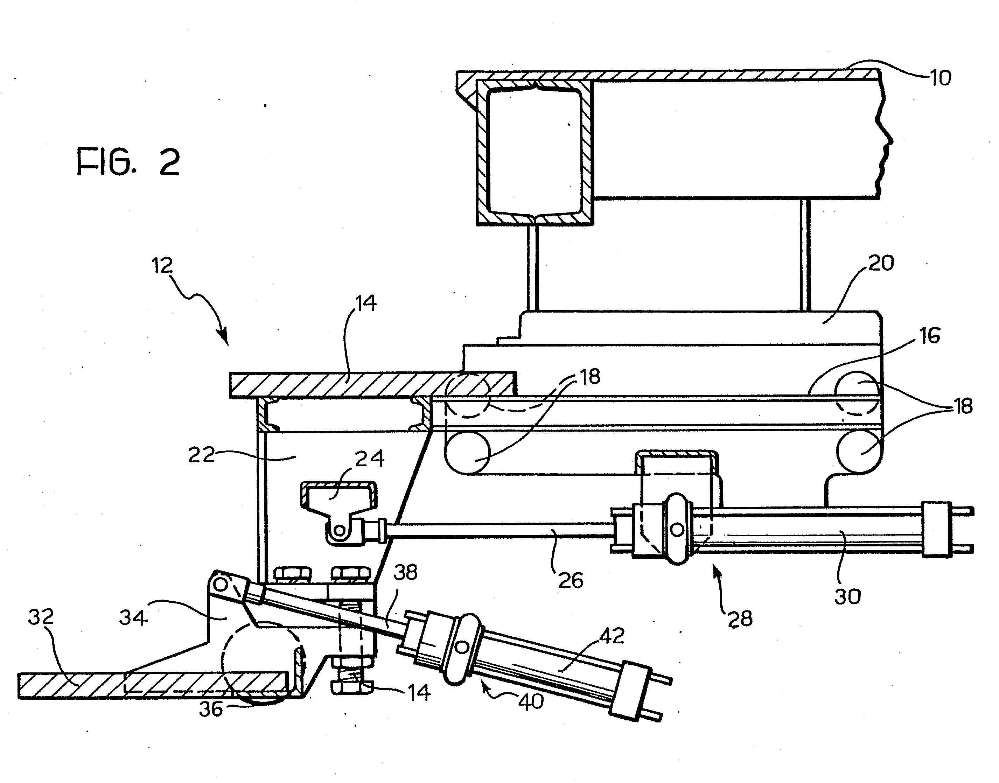

When the jacks 28 are disposed in the contracted position illustrated in Figure 1, the runner 16 and the upper tread 14 are withdrawn beneath the floor 10. The extension of the two jacks 28 causes the advance of the runner 16 so as to dispose the upper tread 14 in the extended position illustrated in Figure 2, in which it projects relative to the floor 10.

A lower tread, indicated 32, is constituted by a plate having side flanges 34 through which passes a pin 36 by means of which the lower tread 32 is articulated to the side support 22 of the runner 16.

The shaft 38 of a pneumatic jack 40 is articulated to each of the flanges 34, the cylinder 42 of the jack being rigid with the runner 16, in a manner not illustrated, and thus movable together therewith.

When the jacks 40 are contracted, the lower tread 32 is in the raised position illustrated in Figure 1, in which it is disposed perpendicular to the upper tread 14.

The extension of the jacks 40 causes the rotation of the lower tread 32 about the pin 36 until it is disposed in the lower position of Figure 2, in which it is parallel to and projecting relative to the upper tread 14. Screw stop members 44 carried by the flanges 34 allow the rotation of the lower tread 32 to be stopped in the desired position, normally at a distance of the order of 265 mm from the upper tread 14.

It will be clear from the above that the movements of the two treads 14, 32 of the steps 12 are controllable independently of each other, except for the fact that when the upper tread 14 extends or withdraws relative to the floor 10 the lower tread 32 also undergoes the same displacement. Thus, it is apparent that rotation of the lower tread 32 from the raised position to the lowered position may be achieved independently of the displacement of the upper tread 14 and hence only when the use of the lower tread 32 is made necessary to make up for an excessive difference in levels between the floor 10 and the fixed platform for passengers to board and alight from the vehicle.

CLAIMS:

1.    Steps with movable treads, particularly for railway and tramway vehicles, characterised in that they comprise an upper tread (14) slidable parallel to and beneath the floor (10) of the vehicle between a withdrawn position and an extended position relative to the floor (10), and a lower tread (32) articulated to a support structure (22) rigid with the upper tread (14) and rotatable between a raised position in which it extends perpendicular to the upper tread (14) and a lowered position in which it extends parallel to and projects further than the upper tread (14), drive means (28, 40) being provided for effecting the sliding of the upper tread (14) and the rotation of the lower tread (32) independently.

2.    Steps according to Claim 1, characterised in that the drive means are pressurized-fluid jacks (28, 40).

FIG. 1

FIG. 2

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | FR-A-2 349 481 (LINKE-HOFMANN-BUSH) * Figures 1,2; page 2, lines 22-27 * | 1,2 | B 61 D 23/02 B 60 R 3/02 |
| Y | GB-A-2 064 441 (MAN MASCHINENFABRIK) * Figures 1,2,3; claims 1,3,4 * | 1,2 | |
| A | FR-A-2 229 595 (DOWALDWERKE ADOLF) * Figure 1; page 3, lines 21-24 * | 1 | |
| A | GB-A-2 010 192 (BRITISH LEYLAND) * Figures 1,2,3 * | 1,2 | |
| | ----- | | TECHNICAL FIELDS SEARCHED (Int. Cl. ³) B 61 D 23/00 B 60 R 3/02 |

The present search report has been drawn up for all claims

| Place of search THE HAGUE | Date of completion of the search 25-05-1984 | Examiner MARTINOZZI G.M.E. |
|---|---|---|